# EUROPÄISCHE PATENTANMELDUNG

(11) **EP 0 610 669 A2**
(43) Veröffentlichungstag der Anmeldung: **17.08.1994**
(21) Anmeldenummer: 94100343.6
(22) Anmeldetag: 12.01.1994
(51) Int. Cl.: A61H 23/02, H04R 5/02

(54) **Vorrichtung zum Behandeln von Körperteilen mit Vibrationen**

(30) Priorität: 13.01.1993 DE 9300343 U
(71) Anmelder: Archinal, Thomas H., D-64319 Pfungstadt-Hahn (DE)
(72) Erfinder: Archinal, Thomas H., D-64319 Pfungstadt-Hahn (DE)
(74) Vertreter: Zinngrebe, Horst, Dr.rer.nat.

(57) **Zusammenfassung**

Beschrieben wird eine Vorrichtung zum Behandeln von Körperteilen mit Vibrationen, bei welcher ein elektrodynamischer Vibrationsgenerator (10, 18, 14, 16) von einem Gehäuse (1, 5, 7) umschlossen ist. Um eine wirksame basale vibratorische Stimulation, insbesondere bei schwerst- oder hörbehinderten Menschen zu erreichen, ist vorgesehen, daß der Vibrationsgenerator etwa mittig innerhalb des als Sitzmöbel gestalteten Gehäuses angeordnet und mit einem Vibrationsverstärker (12, 40, 44) ausgerüstet ist.

## Beschreibung

Die Erfindung betrifft eine Vorrichtung zum Behandeln von Körperteilen mit Vibrationen, bei welcher ein elektrodynamischer Vibrationsgenerator von einem Gehäuse umschlossen ist.

Aus der europäischen Patentschrift 171 423 ist ein Apparat zur äußeren Behandlung von Körperteilen mit Schallwellen bekannt, bei dem in einem festen zylindrischen Gehäuse ein an einen Schallfrequenzgenerator angeschlossener Lautsprecher veränderbarer Frequenz angeordnet ist. Der Schallgenerator erzeugt Schallwellen im Frequenzbereich zwischen 1 und 1000 Hz. Bei diesem Apparat werden die Schallwellen durch einen kegelförmigen Aufsatz auf einer Stirnseite des Rohres abgestrahlt, der auf das zu behandelnde Körperteil gerichtet werden soll.

Aus der europäischen Patentanmeldung 251 430 ist eine ähnliche Vorrichtung bekannt, bei der der Lautsprecher etwa mittig in einem kastenförmigen gasgefüllten Gehäuse angeordnet ist, über welches die Schallwellen abgestrahlt werden sollen.

Aus der deutschen Gebrauchsmusterschrift 87 04 576 ist eine Massagerolle bekannt, deren Inneres mit Schaumstoff ausgefüllt ist. In den Schaumstoff ist ein Vibrationsmotor eingebettet.

Alle diese Vorrichtungen haben den Nachteil, daß der Therapieerfolg recht gering ist.

Der Erfindung liegt daher die Aufgabe zugrunde, eine Vorrichtung zu schaffen, die eine wirksame basale vibratorische Stimulation ermöglicht und beispielsweise bei der Behandlung schwerstbehinderter oder hörbehinderter Menschen eingesetzt werden kann.

Dazu ist vorgesehen, daß der Vibrationsgenerator etwa mittig innerhalb des als Sitzmöbel gestalteten Gehäuses angeordnet und mit einem mechanischen Vibrationsverstärker ausgerüstet ist. Die auf diese Weise erzeugten Vibrationen können vom Körper optimal aufgenommen werden, ohne die Umgebung durch starke Schallbelästigung zu beeinträchtigen. Die erfindungsgemäße Vorrichtung kann als wirksames Arbeitsmitttel in der Musiktherapie, zum Lösen von Verkrampfungen und als Arbeitshilfe für schwer- und schwerstbehinderte Kinder und Erwachsene mit Erfolg eingesetzt werden.

Zweckmäßig weist der Vibrationsgenerator zwei Lautsprecher auf, deren Membrane aufeinanderzuweisen, wobei dann der Vibrationsverstärker zwischen den Membranen angeordnet sein kann. Die Mittellinie der beiden Lautsprecher kann entweder quer zur Achse des Sitzmöbels oder sich in der Achse desselben erstrecken. In besonders einfacher Weise können die Lautsprecher auf einer an der Innenwand des Sitzmöbels befestigten Resonanzplatte festgelegt sein. Als Vibrationsverstärker kommt mit besonderem Vorteil ein Hartstoffrohr in Betracht, dessen gegenüberliegende Enden jeweils an den die Schwingspulen der Lautsprecher tragenden Rohrhülsen befestigt sind. Das Hartstoffrohr als Schwingungskörper kann längs seines mittleren Abschnittes mit einer festen Masse ausgefüllt sein, was zu einer Erhöhung des Verstärkungseffekts führt. Durch Wahl der Wandstärke des Hartstoffrohres oder der axialen Länge der Masse kann die Frequenz der abgestrahlten Vibrationen zwischen 1...1000 Hz, bevorzugt zwischen 100...200 Hz bestimmt werden. Das Hartstoffrohr erstreckt sich zweckmäßig durch ein Loch in der Resonanzplatte. Die Lautsprecher können vorteilhafterweise an einen Kassettenrecorder, gegebenenfalls über einen Verstärker, angeschlossen sein, welcher in einer Stirnplatte des Sitzmöbels gehalten ist. Das Sitzmöbel kann als Gymnastikrolle, die gegebenenfalls mit einem durch Schaumstoff unterlegten Kunstlederüberzug oder dergleichen umkleidet sein kann, oder als Hocker ausgeführt sein.

In bevorzugter weiterer Ausgestaltung der Erfindung ist vorgesehen, daß der Vibrationsgenerator an einer als Sitzunterlage dienenden Deckplatte des Gehäuses mechanisch gekoppelt ist, wobei die Deckplatte mit den übrigen Teilen des Gehäuses, insbesondere dessen Seitenwänden, vorzugsweise elastisch verbunden ist. Mit dieser Ausführungsform ergibt sich ein erhöhter Wirkungsgrad in der Behandlung von auf dem Gehäuse sitzenden Patienten.

Die Erfindung wird nachstehend anhand der in der beigefügten Zeichnung dargestellten Ausführungsbeispiele im einzelnen beschrieben. Es zeigen:
- Fig. 1:: einen Axialschnitt durch eine Gymnastikrolle, die mit den Merkmalen der Erfindung ausgestattet ist;
- Fig. 2:: eine schematische Darstellung des Vibrationsgenerators mit Vibrationsverstärker;
- Fig. 3:: eine andere Ausführungsform der Erfindung; und
- Fig. 4:: eine schematische Darstellung ähnlich der Fig. 2 von einer weiteren Ausführungsform der Erfindung;
- Fig. 5:: eine schematische Darstellung ähnlich der Fig. 1 von einer weiteren Ausführungsform der Erfindung.

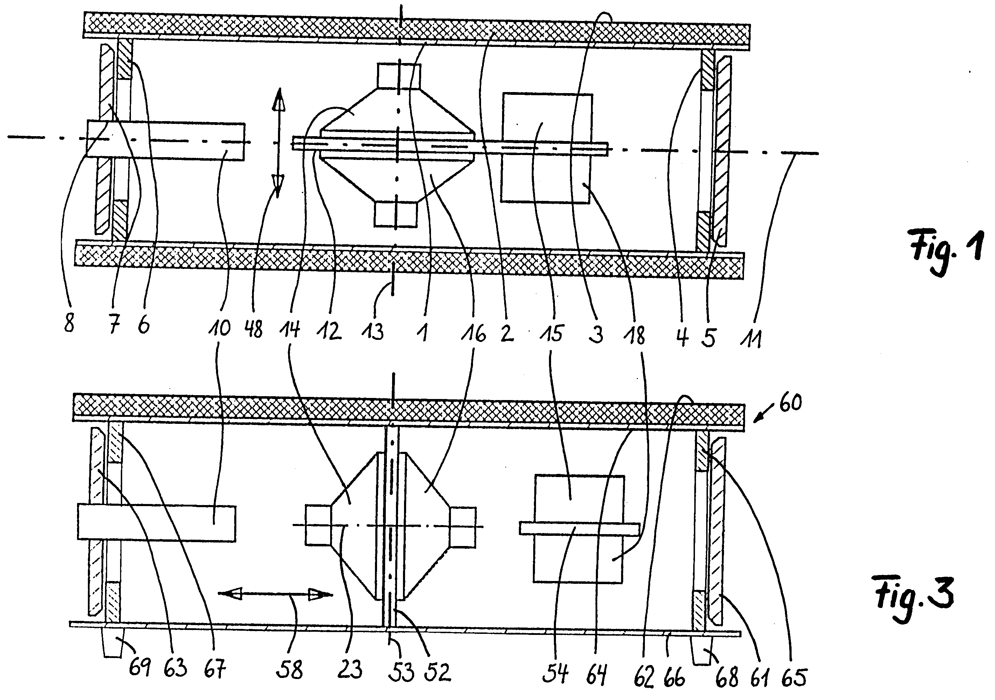

Gemäß Fig. 1 besteht die Gymnastikrolle aus einem zylindrischen Harstoffrohr 1, auf welches ein mit Schaumstoff 2 unterlegter Kunstlederüberzug 3 aufgezogen ist. An den beiden gegenüberliegenden Stirnseiten des Rohres 1 sind an dessen Innenseite hölzerne Spannringe 4, 6 befestigt, auf welche von außen je eine scheibenförmige Platte 5, 7 als Abschluß des Rohrinneren aufgeschraubt ist. Die Stirnplatte 7 ist mit einer zentralen rechtwinkligen Ausnehmung 8 versehen, in welche ein schematisch angedeuteter Kassettenrecorder 10 mit von außen zugänglichem Bedienungsfeld eingesetzt und in der Öffnung 8 befestigt werden kann. An der Stirnplatte 7 kann eine bewegliche nicht dargestellte Blende befestigt sein, welche das Bedienungsfeld abdecken und damit vor unautorisiertem Zugriff schützen kann.

An den Innenwänden der Rolle 1 ist eine Resonanzplatte 12 aus Holz so befestigt, daß die Längsachse 11 der Rolle 1 in der Mittelebene der Resonanzplatte 12 liegt. Die Resonanzplatte 12 trägt zwei Lautsprecher 14, 16, die der elektrodynamische Teil eines Vibrationsgenerators sind, welcher einen von einem Akkumulator 15 gespeisten Verstärker 18 umfaßt. Der Akkumulator 15 und der Verstärker 18 sind auf der dem Kassettenrecorder 10 abgewandten Seite der Lautsprecher 14, 16 auf der Resonanzplatte 12 so befestigt, daß der Akkumulator 15 etwa auf der Oberseite der Resonanzplatte und der Verstärker 8 dann auf der Unterseite der Resonanzplatte 12 einander gegenüberliegend angeordnet sind. Nicht dargestellt sind elektrische Leitungen zwischen dem Kassettenrecorder 10 und dem Verstärker 18 sowie dem Verstärker 18 und den Lautsprechern 14, 16 einerseits sowie zwischen dem Akkumulator 15 und dem Kassettenrecorder 10 sowie dem Verstärker 18 andererseits. Der Akkumulator 15 dient zur Stromversorgung sowohl für den Kassettenrecorder 10 wie auch den Verstärker 18, während die akkustischen Signale in elektrischer Form vom Kassettenrecorder 10 über die erwähnten Leitungen zum Verstärker 18 und den Lautsprechern 14, 16 übertragen werden.

Die Mittellinien 23 der beiden Lautsprecher 14, 16 fluchten und fallen mit der zur Längsachse 11 der Rolle quer liegenden Mittellinie 13 zusammen, wobei die Membranen 24, 26 der Lautsprecher 14, 16 mit ihren Trichtern aufeinander zu gerichtet sind. Der Lautsprecher 14 ist auf der Oberseite der Resonanzplatte 12 und der andere Lautsprecher 16 ist auf der Unterseite der Resonanzplatte 12 so befestigt, daß die Befestigungsbohrungen der Lautsprecher mit entsprechenden Durchgangsbohrungen in der Resonanzplatte 12 fluchten. Demzufolge sitzt jeder der Lautsprecher 14, 16 über seinen Hartgummiwulst 28, 29 auf der Oberseite beziehungsweise Unterseite der Resonanzplatte 12.

In die Trägerhülse 34 für die in den Spalt 36 des Permanentmagneten 31 eintauchende Schwingspule des Lautsprechers 14 ist ein Hartstoffrohr 40 axial eingesetzt, dessen Außendurchmesser gleich dem Außendurchmesser der Hülse 34 ist und mit einer endseitigen Abdrehung 41 vom Außenumfang in das Innere der Hülse 34 ragt. Durch die feste Verbindung mit der Hülse 34 nimmt das Hartstoffrohr 40 an den Schwingungen der Hülse 34 und damit der Membran 24 teil. Zusätzlich kann das Hartstoffrohr 40 mit der Hülse 34 verklebt sein.

Beide Lautsprecher 14, 16 sind elektrisch wie auch in ihrem konstruktiven Aufbau gleich. Demzufolge ist das der Abdrehung 41 gegenüberliegende Ende 42 des Hartstoffrohrs 40 in die die Schwingspule des Lautsprechers 16 tragende Hülse 35 eingesetzt und zweckmäßig mit dieser verklebt, so daß das Hartstoffrohr 40 zusammen mit den Hülsen 34 und 35 gemeinschaftlich Vibrationen längs der Mittellinie 23 ausführen. Dazu ist Vorsorge dafür getroffen, daß der Lautsprecher 16 die die Schallwellen repräsentierenden elektrische Signale in einer Polarität erhält, die zu derjenigen der dem Lautsprecher 14 zugeführten Signale umgekehrt ist. Dies kann realisiert sein durch Vertauschen der Polarität der Anschlußkabel oder durch eine entsprechende elektrische Weiche innerhalb des Verstärkers 18.

Im Inneren des Hartstoffrohres, das beispielsweise aus Hart-PVC bestehen kann, befindet sich längs eines mitteleren Teils seiner axialen Länge eine Schwingmasse 44, die ebenfalls aus Hart-PVC bestehen kann. Die Schwingmasse 44 ist an der Innenwand des Hartstoffrohres 40 mit diesem fest verbunden und füllt im dargestellten Beispiel die lichte Weite des Hartstoffrohres ganz aus, so daß sie an den Schwingungen des Rohres 40 teilnimmt. Die Schwingmasse 44 ist beispielsweise in ihrer axialen Ausdehnung so gewählt, daß die Resonanzfrequenz des Hartstoffrohres 40 mit Schwingmasse 44 im Bereich von 1...1000 Hz, bevorzugt 100...200 Hz liegt. Soll die Resonanzfrequenz erhöht werden, muß die Schwingmasse 44 reduziert werden und umgekehrt.

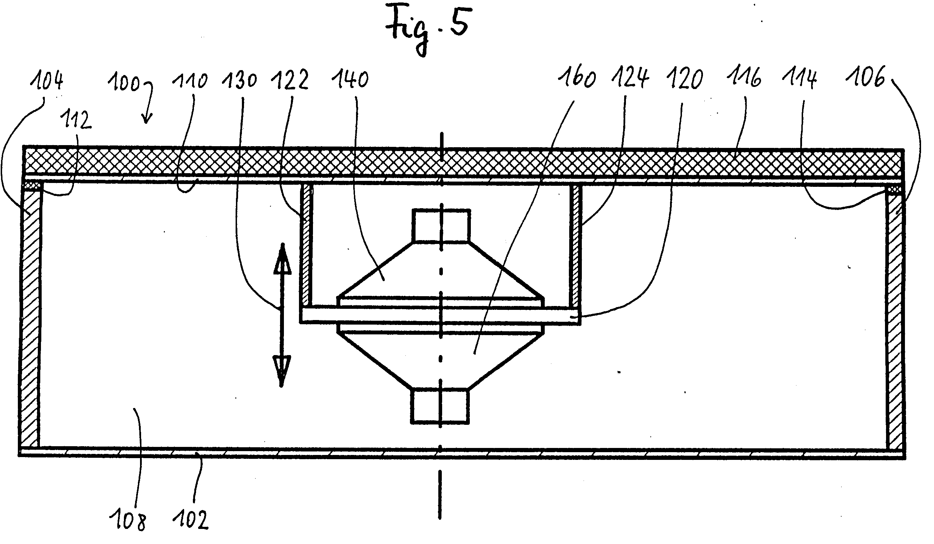

In der Resonanzplatte 12 befindet sich im Bereich des Hartstoffrohres 40 ein Ausschnitt 46, innerhalb dessen das Hartstoffrohr 40 frei beweglich ist. Der Ausschnitt 46 kann etwa wie der Ausschnitt 86 gemäß Fig. 4 so weit gewählt werden, daß die Membranen 24, 26 in ihrer akustischen Abstrahlung durch die den Ausschnitt 46 begrenzenden Teil der Resonanzplatte 12 nicht gedämpft werden. Die Schwingungsrichtung des Hartstoffrohres 40 mit den zugehörigen Hülsen 34 und 35 weist gemäß Doppelpfeil 48 in Richung der Mittellinie 13. Wird in dem Kassettenrecorder ein Musikstück gewählt, wird dieses im Verstärker 18 verstärkt und in der beschriebenen Weise den beiden Lautsprechern 14 und 16 zugeführt. Der Vibrationsverstärker in Form des Hartstoffrohres 40, der Schwingmasse 44 sowie der beteiligten Hülsen 34 und 35 betont in der Abstrahlung die Frequenzen in dem genannten Bereich, während die höherfrequenten Anteile des Musikstückes aufgrund von Oberwellen, die sich in den äußeren Abschnitten 21 und 25 der Membranen 24 und 26 ausbilden, mit verminderter Lautstärke abgegeben werden. Damit wird das Rohr 1 in erster Linie mit den abgestrahlten Vibrationen mitschwingen, die von dem auf der Rolle sitzendem Patienten in dessen Basisbereich aufgenommen werden, während die Behandlung von leiser Musik begleitet ist.

In der Auswahl des Musikstückes am Recorder 10 bestehen keine Beschränkungen.

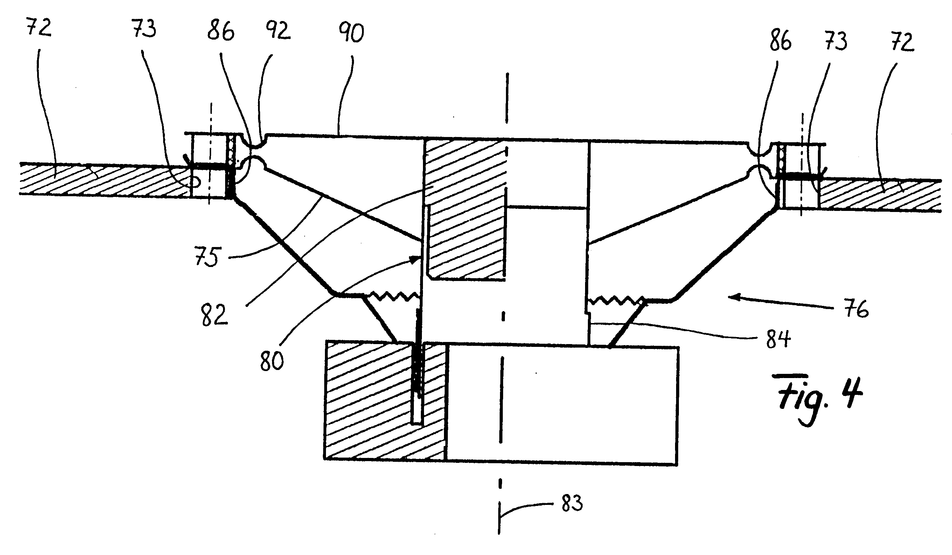

Fig. 3 zeigt eine Ausführungsform der Erfindung, die gegenüber der vorstehend beschriebenen in zweifacher Weise abgeändert ist.

Zum einen sind die Lautsprecher 14, 16 zusammen mit der zwischen ihnen verlaufenden Resonanzplatte 52 gegenüber der Anordnung gemäß Fig. 1 um 90° verdreht. Zum anderen ist das Gehäuse als Hocker mit quadratischem oder rechteckigem Grundriß ausgeführt. Die übrigen Baugruppen und Anordnungen sind mit denen, die im Zusammenhang mit Fig. 1 beschrieben worden sind, gleich und tragen gleiche Bezugszeichen.

Die Resonanzplatte 52 erstreckt sich in der zur Sitzfläche 62 des Hockers 60 senkrechten Mittellinie 53 und ist an der Innenwand der hölzernen Deckplatte 64 sowie der hölzernen Bodenplatte 66 und an den nicht dargestellten Seitenwänden befestigt. Der Akkumulator 15 und der Verstärker 18 sind auf einer separaten Platte 54 befestigt, die an den Innenflächen der nicht dargestellten Seitenwände des Hockers 60 befestigt ist. Den Zugang zum Inneren des Hockers 60 ermöglichen gegenüberliegende Stirnplatten 61, 63, die auf mit zentralen Öffnungen versehene und an der Deckplatte 64, der Bodenplatte 66 und den nicht dargestellten Seitenplatten befestigte Ansätze 65, 67 die Öffnungen in diesen verdeckend geschraubt sind. In der Stirnplatte 67 ist eine Öffnung entsprechend der Öffnung 8 gelassen, in welcher der Kassettenrecorder 10 wie bei der Ausführungsform der Erfindung nach Fig. 1 befestigt ist. Die Deckplatte ist mit einem schaumstoffunterlegten Kunstlederüberzug 62 als Sitzfläche überzogen, während an der Außenseite der Bodenplatte 66 Füße 68, 69 befestigt sind.

Durch die um 90° gedrehte Anordnung der Lautsprecher 14, 16 ergibt sich eine Hauptvibrationsrichtung, die gemäß Doppelpfeil 58 quer zur Mittellinie 53 weist.

Es liegt im Rahmen der Erfindung, auch bei dem Hocker 60 eine Anordnung der Lautsprecher 14, 16 vorzusehen, die derjenigen der im Zusammenhang mit Fig. 1 beschriebenen Gymnastikrolle gleicht.

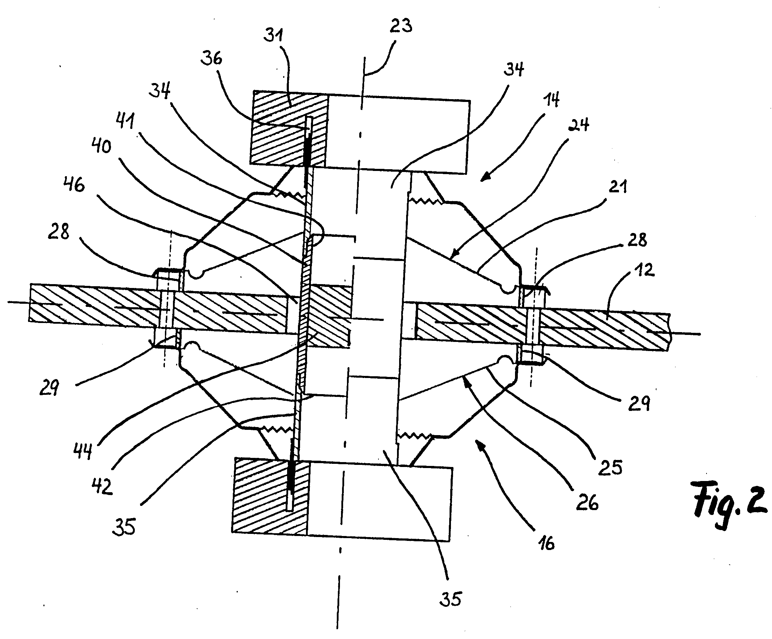

Fig. 4 zeigt einen der Fig. 2 ähnlichen Ausschnitt einer weiteren Ausführungsform der Erfindung. Danach ist eine Resonanzplatte 72 aus Holz im Inneren der Rolle wie die oben beschriebene Resonanzplatte 12 befestigt, welche einen Lautsprecher 76 trägt. Der Lautsprecher 76 entspricht in seinem Aufbau und in seinen elektrischen sowie akustischen Eigenschaften dem Lautsprecher 16 aus dem vorher beschriebenen Ausführungsbeispielen der Erfindung. Der Lautsprecher 76 ist an Durchgangsbohrungen 73 der Resonanzplatte 72 an seinem Umfang befestigt, wobei sich ein Ausschnitt 86 der Resonanzplatte 72 bis nahe an die Durchgangsbohrungen 73 erstreckt. Dadurch weist die Membran 75 des Lautsprechers 76 in die Öffnung des Ausschnitts 86. In die Trägerhülse 84 des Lautsprechers 76 ist ein Hartstoffrohr 80 fest eingesetzt, welches im Inneren eine Schwingmasse 82 aufweist. Die Befestigung des Hartstoffrohres 80 mit Schwingmasse 82 in der Trägerhülse 84 ist in gleicher Weise ausgeführt wie oben anhand der anderen Ausführungsbeispiele der Erfindung beschrieben worden ist. Bei der in Fig. 4 dargestellten Ausführungsform ist der Ausschnitt 86 von einer kreisförmigen Flachmembran 90 überspannt, an deren Rand eine umlaufende Sicke 92 als Federelement eingeprägt ist und die mit dem Lautsprecher 76 an den Durchgangsbohrungen 73 der Resonanzplatte 72 befestigt ist. Das Hartstoffrohr 80 ist gegenüber den anderen Ausführungsbeispielen der Erfindung in seiner Länge derart verkürzt, daß ein freies Ende fest gegen die Flachmembran 90 anliegt und mit ihr gegebenenfalls verbunden, beispielsweise verklebt ist. Dadurch ist das Hartstoffrohr 80 an der Flachmembran 90 abgestützt, welche aufgrund ihrer federnden Eigenschaft an den Schwingungen des Hartstoffrohrs 80 vorzugsweise längs der Mittellinie 83 des Lautsprechers 76, die quer zur Ebene der Resonanzplatte 72 weist, teilnimmt.

Anstelle einer durchgehenden zusammenhängenden Flachmembran kann auch ein den Ausschnitt 86 überbrückender elastischer Steg vorgesehen sein, an welchem sich das Hartstoffrohr 80 abstützt und der an seinen äußeren Enden an der Resonanzplatte 72 befestigt ist.

Fig. 5 zeigt als weitere Ausführungsform der Erfindung ein Sitzmöbel in Form eines Hockers 100 mit Bodenplatte 102 sowie Seitenplatten 104, 106 und 108 aus Holz. Auf den Seitenplatten 104, 106, 108 sowie der nicht dargestellten vorderen Seitenplatte ist eine Deckplatte 110 über federnde Elemente 112, 114 beispielsweise aus Gummi oder weichem Kunststoff befestigt. Die Deckplatte 110 ist wieder mit einer Schaumstoffpolsterung 116 überzogen.

Nicht dargestellt ist eine Aufnahme für einen Cassettenrekorder sowie die im Inneren des Hockers 100 untergebrachte Stromversorgung mit Verstärker, die an beliebiger Stelle an den Seitenwänden oder der Bodenplatte vorgesehen sein können.

In der geometrischen Mitte des von dem Hocker 100 umschlossenen Raumes ist eine Resonanzplatte 120 über mehrere Streben 122, 124 an der Innenseite der Deckplatte 110 mittig aufgehängt. Beiderseits der Resonanzplatte 120 ist über derselben ein erster Lautsprecher 140 und unterhalb derselben ein weiterer Lautsprecher 160 in einer Weise befestigt, wie das im Zusammenhang mit den Fig. 1 und 2 anhand der Lautsprecher 14 und 16 oben beschrieben worden ist. Die Schwingungsmembranen beider Lautsprecher 140, 160 sind mit einem Vibrationsverstärker gekoppelt, der vorstehend anhand der genannten Figuren erläutert worden ist.

Diese Ausführungsform der Erfindung hat den Vorteil, daß die Vibrationen, die gemäß Doppelpfeil 130 quer zur Deckplatte 110 weisen und von dem Schwingungssystem mit den Lautsprechern 140 und 160 mit zugehörigem Vibrationsverstärker ausgehen, unmittelbar mechanisch über die Streben 122, 124 der Deckplatte 110 aufgeprägt werden, die vermöge ihrer elastischen Verbindung mit den Seitenwänden 104, 106 und 108 eine größere Beweglichkeit in der Teilnahme an den Schwingungen besitzt. Daher ist der Wirkungsgrad der Beeinflussung von auf dem Hocker 100 sitzenden Patienten höher als bei dem vorangegangenen Ausführungsbeispielen.

## Patentansprüche

1. Vorrichtung zum Behandeln von Körperteilen mit Vibrationen, bei welcher ein elektrodynamischer Vibrationsgenerator (10, 18, 14, 16) von einem Gehäuse (1, 5, 7) umschlossen ist, dadurch gekennzeichnet, daß der Vibrationsgenerator etwa mittig innerhalb des als Sitzmöbel gestalteten Gehäuses angeordnet und mit einem Vibrationsverstärker (12, 40, 44) ausgerüstet ist.

2. Vorrichtung nach Anspruch 1, dadurch gekennzeichnet, daß das Gehäuse aus Holz besteht.

3. Vorrichtung nach Anspruch 1 oder 2, dadurch gekennzeichnet, daß der Vibrationsgenerator wenigstens einen Lautsprecher (14, 16; 76) aufweist.

4. Vorrichtung nach einem der vorstehenden Ansprüche, dadurch gekennzeichnet, daß der Vibrationsgenerator zwei Lautsprecher (14, 16) aufweist, deren Membrane (24, 26) aufeinander zuweisen.

5. Vorrichtung nach Anspruch 4, dadurch gekennzeichnet, daß der Vibrationsverstärker (12, 40, 44) zwischen den Membranen (24, 26) angeordnet ist.

6. Vorrichtung nach einem der vorstehenden Ansprüche, dadurch gekennzeichnet, daß der Vibrationsverstärker zwischen einer der Membranen (75) und einem passiven Federlager (90, 92) angeordnet ist.

7. Vorrichtung nach Anspruch 6, dadurch gekennzeichnet, daß das passive Federlager eine elastische Membrane (90) ist, auf der der Vibrationsverstärker abgestützt ist.

8. Vorrichtung nach Anspruch 6, dadurch gekennzeichnet, daß das Federlager eine elastischer Steg ist, auf welchem der Vibrationsverstärker abgestützt ist.

9. Vorrichtung nach einem der vorstehenden Ansprüche, dadurch gekennzeichnet, daß die Mittellinie (13, 83) der Lautsprecher (14, 16, 76) sich quer zur Achse (11) des Sitzmöbels erstreckt.

10. Vorrichtung nach einem der Ansprüche 1 bis 8, dadurch gekennzeichnet, daß die Mittellinie (13, 83) der Lautsprecher (14, 16, 76) sich in der Achse (11) des Sitzmöbels erstreckt.

11. Vorrichtung nach einem der vorstehenden Ansprüche, dadurch gekennzeichnet, daß die Lautsprecher (24, 26) auf einer an einer Innenwand des Sitzmöbels befestigten Resonanzplatte (12, 52, 72) festgelegt sind.

12. Vorrichtung nach einem der vorstehenden Ansprüche, dadurch gekennzeichnet, daß der Vibrationsverstärker ein Hartstoffrohr (40, 80) aufweist, von dem wenigstens ein Ende mit einer die zugehörige Schwingspule tragenden Hülse (34, 35) fest verbunden ist.

13. Vorrichtung nach Anspruch 12, dadurch gekennzeichnet, daß das Hartstoffrohr (40, 80) längs eines mittleren Abschnittes mit einer festen Masse (44, 82) ausgefüllt ist.

14. Vorrichtung nach einem der Ansprüche 12 oder 13, dadurch gekennzeichnet, daß sich das Hartstoffrohr (40, 80) durch ein Loch (46, 86) in der Resonanzplatte (12, 52, 72) erstreckt.

15. Vorrichtung nach einem der vorstehenden Ansprüche, dadurch gekennzeichnet, daß die Lautsprecher (14, 16, 76) an einen Kassettenrecorder (10) gegebenenfalls über einen Verstärker (18), angeschlossen sind, welcher an einer Stirnplatte (7) des Sitzmöbels gehalten ist.

16. Vorrichtung nach Anspruch 15, dadurch gekennzeichnet, daß das Bedienungsfeld des Kassettenrecorders (10) durch eine bewegliche Blende vor unautorisiertem Zugriff geschützt ist.

17. Vorrichtung nach einem der vorstehenden Ansprüche, dadurch gekennzeichnet, daß das Sitzmöbel ein Hocker ist.

18. Vorrichtung nach einem der Ansprüche 1 bis 16, dadurch gekennzeichnet, daß das Sitzmöbel eine Gymnastikrolle ist.

19. Vorrichtung nach Anspruch 18, dadurch gekennzeichnet, daß das Rohr (1) der Gymnastikrolle mit einem durch Schaumstoff (2) unterlegten Kunstlederüberzug (3) umkleidet ist.

20. Vorrichtung nach einem der vorstehenden Ansprüche, dadurch gekennzeichnet, daß die Wandstärke des Hartstoffrohres (40) und/oder die axiale Erstreckung der Masse (44, 82) so gewählt sind, daß die Vibrationsfrequenz zwischen 1...1000 Hz, vorzugsweise zwischen 100...200 Hz liegt.

21. Vorrichtung nach einem der vorstehenden Ansprüche, dadurch gekennzeichnet, daß der Vibrationsgenerator (140, 160) mechanisch mit einer als Sitzunterlage dienenden Deckplatte (110) des Gehäuses (100) gekoppelt ist.

22. Vorrichtung nach Anspruch 21, dadurch gekennzeichnet, daß die Deckplatte (110) mit den übrigen Teilen des Gehäuses (100), insbesondere dessen Seitenwänden (104, 106, 108), elastisch verbunden ist.
